(19) Europäisches Patentamt
European Patent Office
Office européen des brevets

(11) EP 2 500 388 A1

## (12) EUROPEAN PATENT APPLICATION
published in accordance with Art. 153(4) EPC

(43) Date of publication:
**19.09.2012 Bulletin 2012/38**

(21) Application number: **10830002.1**

(22) Date of filing: **11.11.2010**

(51) Int Cl.:
*C09J 7/02* (2006.01)   *C09J 11/06* (2006.01)
*C09J 133/04* (2006.01)   *C09J 133/26* (2006.01)

(86) International application number:
**PCT/JP2010/070150**

(87) International publication number:
**WO 2011/059043 (19.05.2011 Gazette 2011/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.11.2009 JP 2009258401**

(71) Applicant: Nitto Denko Corporation
Osaka 567-8680 (JP)

(72) Inventors:
• **NIWA Masahito**
Osaka (JP)
• **OKAMOTO Masayuki**
Osaka (JP)
• **HIGUCHI Naoaki**
Osaka (JP)

(74) Representative: **Grünecker, Kinkeldey,
Stockmair & Schwanhäusser**
**Leopoldstrasse 4**
**80802 München (DE)**

## (54) PROCESS FOR PRODUCTION OF ACRYLIC ADHESIVE SHEET

(57)    The present invention relates to a process for producing an acrylic pressure-sensitive adhesive sheet, containing forming an acrylic pressure-sensitive adhesive layer by crosslinking an acrylic pressure-sensitive adhesive composition containing: an acrylic copolymer obtained by polymerizing monomer components containing the following (a) and (b); and isocyanate-based crosslinking agent, and containing substantially no crosslinking catalyst: (a) 80 to 99.9 wt% of monomer (m1) represented by $CH_2=C(R^1)COOR^2$ ($R^1$ represents a hydrogen atom or a methyl group, and $R^2$ represents an alkyl group having a carbon number of 1 to 20); and (b) 0.1 to 20 wt% of monomer (m2) represented by $CH_2=C(R^3)CONHR^4$ ($R^3$ represents a hydrogen atom or a methyl group, and $R^4$ represents a hydroxyalkyl group having a carbon number of 1 to 4).

EP 2 500 388 A1

**Description**

TECHNICAL FIELD

The present invention relates to a process for producing an acrylic pressure-sensitive adhesive sheet. More specifically, the present invention relates to a process for producing an acrylic pressure-sensitive adhesive sheet having excellent releasability to a metal surface or a glass surface.

BACKGROUND ART

In recent years, a pressure-sensitive adhesive sheet is being utilized in various aspects such as fixing (joining), transportation, protection, and decoration of an article. A representative examples of this pressure-sensitive adhesive sheet include an adhesive sheet having a pressure-sensitive adhesive layer formed using a pressure-sensitive adhesive composition (acrylic pressure-sensitive adhesive composition) containing an acrylic copolymer as a base polymer. As such an acrylic copolymer, there may be used a material where a copolymer mainly containing an alkyl (meth)acrylate (main component) is further blended with an appropriate crosslinking agent and crosslinked.

In a releasable acrylic pressure-sensitive adhesive sheet, used, for example, as a pressure-sensitive adhesive sheet for surface protection, a masking tape, a pressure-sensitive adhesive sheet for electric and electronic equipment, a pressure-sensitive adhesive sheet for optical film, and a pressure-sensitive adhesive sheet for automobile, when the cohesive force of the pressure-sensitive adhesive layer is insufficient, there arises a problem that the pressure-sensitive adhesive remains on an adherend surface at the time of releasing. Therefore, the cohesive force of the pressure-sensitive adhesive needs to be increased, and a highly crosslinked pressure-sensitive adhesive layer must be formed. On the other hand, since crosslinking is a chemical reaction, this proceeds with time and takes a time for stabilization. Also, the pressure-sensitive adhesive force changes with the progress of crosslinking and therefore, the crosslinking reaction must be completed early. To meet such a requirement, for example, in the case of a combination of an acrylic copolymer having a hydroxyl group and an isocyanate-based crosslinking agent, a metal catalyst such as tin compound is being to be used (see, Patent Document 1).

RELATED ART

PATENT DOCUMENT

Patent Document 1: JP-A-2005-314513 (Example 3)

SUMMARY OF THE INVENTION

PROBLEMS THAT THE INVENTION IS TO SOLVE

However, in view of environmental consideration, use of specific metals is subject to legal regulations or is concerned. Therefore, a production process for an acrylic pressure-sensitive adhesive sheet, not using a metal catalyst, is demanded.

MEANS FOR SOLVING THE PROBLEMS

As a result of intensive studies to attain the above-described object, the present inventors have found that when an acrylic polymer composed of a specific monomer configuration is used, a sufficient crosslinking property and good adhesive characteristics are exhibited substantially without using a catalyst. The present invention has been accomplished based on this finding. That is, the present invention is as follows.

The present invention provides a process for producing an acrylic pressure-sensitive adhesive sheet, comprising forming an acrylic pressure-sensitive adhesive layer by crosslinking an acrylic pressure-sensitive adhesive composition containing:

an acrylic copolymer obtained by polymerizing monomer components containing
at least one monomer (monomer m1) selected from alkyl (meth)acrylates represented by the following formula (I) in an amount of 80 to 99.9 wt% based on the entire amount of the monomer components:

$$CH_2=C(R^1)COOR^2 \qquad (I)$$

(wherein $R^1$ represents a hydrogen atom or a methyl group, and $R^2$ represents an alkyl group having a carbon number of 1 to 20), and

at least one monomer (monomer m2) selected from N-hydroxyalkyl (meth)acrylamides represented by the following formula (II) in an amount of 0.1 to 20 wt% based on the entire amount of the monomer components:

$$CH_2=C(R^3)CONHR^4 \qquad (II)$$

(wherein $R^3$ represents a hydrogen atom or a methyl group, and $R^4$ represents a hydroxyalkyl group having a carbon number of 1 to 4);
and
an isocyanate-based crosslinking agent,
and containing substantially no crosslinking catalyst.

In the present invention, it is preferred that the acrylic copolymer has a glass transition temperature (Tg) of -10°C or lower.

In the present invention, the monomer m2 is preferably N-(2-hydroxyethyl) (meth)acrylamide.

In the present invention, it is preferred that the acrylic pressure-sensitive adhesive layer has a gel fraction of 80% or more.

Further, the production process of the present invention can suitably be used as a production process for an acrylic pressure-sensitive adhesive sheet having releasability.

ADVANTAGE OF THE INVENTION

According to the process for producing an acrylic pressure-sensitive adhesive sheet of the present invention, there can be provided a method making it possible to complete a crosslinking reaction in a short period of time substantially without using a crosslinking catalyst and to produce an acrylic pressure-sensitive adhesive sheet having stable adhesive characteristics.

BRIEF DESCRIPTION OF THE DRAWINGS

[Fig. 1] Fig. 1 is a cross-sectional view schematically showing one configuration example of the pressure-sensitive adhesive sheet according to the present invention.
[Fig. 2] Fig. 2 is a cross-sectional view schematically showing another configuration example of the pressure-sensitive adhesive sheet according to the present invention.
[Fig. 3] Fig. 3 is a cross-sectional view schematically showing another configuration example of the pressure-sensitive adhesive sheet according to the present invention.
[Fig. 4] Fig. 4 is a cross-sectional view schematically showing another configuration example of the pressure-sensitive adhesive sheet according to the present invention.
[Fig. 5] Fig. 5 is a cross-sectional view schematically showing another configuration example of the pressure-sensitive adhesive sheet according to the present invention.
[Fig. 6] Fig. 6 is a cross-sectional view schematically showing another configuration example of the pressure-sensitive adhesive sheet according to the present invention.

MODE FOR CARRYING OUT THE INVENTION

Preferred embodiments of the present invention are described below. The process for producing an acrylic pressure-sensitive adhesive sheet of the present invention is a process for producing an acrylic pressure-sensitive adhesive sheet, comprising forming an acrylic pressure-sensitive adhesive layer by crosslinking an acrylic pressure-sensitive adhesive composition containing:

an acrylic copolymer obtained by polymerizing monomer components containing
at least one monomer (monomer m1) selected from alkyl (meth)acrylates represented by the following formula (I) in an amount of 80 to 99.9 wt% based on the entire amount of the monomer component:

$$CH_2=C(R^1)COOW \qquad (I)$$

(wherein $R^1$ represents a hydrogen atom or a methyl group, and $R^2$ represents an alkyl group having a carbon number of 1 to 20), and

at least one monomer (monomer m2) selected from N-hydroxyalkyl (meth)acrylamides represented by the following formula (II), in an amount of 0.1 to 20 wt% based on the entire amount of the monomer component:

$$CH_2=C(R^3)CONHR^4 \qquad (II)$$

(wherein $R^3$ represents a hydrogen atom or a methyl group, and $R^4$ represents a hydroxyalkyl group having a carbon number of 1 to 4);
and
an isocyanate-based crosslinking agent,
and containing substantially no crosslinking catalyst.

The acrylic pressure-sensitive adhesive composition disclosed here contains, as a base polymer, an acrylic copolymer obtained by polymerizing (at least partially polymerizing) predetermined monomer components. These monomer components contain at least monomer m1 and monomer m2 as essential components.
Monomer m1 is a component serving as the main monomer (main component) of the monomer components and is composed of an alkyl (meth)acrylate represented by the following formula (I), that is, a (meth)acrylic acid ester of an alkyl alcohol. The term "(meth)acrylic acid" as used herein is a concept encompassing an acrylic acid and a methacrylic acid. Also, the "monomer m1 is the main monomer" indicates that the amount of monomer m1 (in the case of containing two or more alkyl (meth)acrylates represented by formula (I), the total amount thereof) as a percentage in the entire amount of the monomer components is 50 wt% or more.

Monomer m1 is at least one monomer selected from alkyl (meth)acrylates represented by the following formula (I):

$$CH_2=C(R^1)COOR^2 \qquad (I)$$

In formula (I), $R^1$ represents a hydrogen atom or a methyl group. Also, in formula (I), $R^2$ represents an alkyl group having a carbon number of 1 to 20. The alkyl group may be linear or may have a branch. Specific examples of the alkyl (meth)acrylate represented by formula (I) include methyl (meth)acrylate, ethyl (meth)acrylate, n-propyl (meth)acrylate, isobutyl (meth)acrylate, sec-butyl (meth)acrylate, t-butyl (meth)acrylate, pentyl (meth)acrylate, isopentyl (meth)acrylate, hexyl (meth)acrylate, heptyl (meth)acrylate, n-octyl (meth)acrylate, isooctyl (meth)acrylate, 2-ethylhexyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate. Among these, an alkyl (meth)acrylate where $R^2$ is an alkyl group having a carbon number of 2 to 14 (hereinafter, such a carbon number range is sometimes referred to as "$C_{2-14}$") is preferred, and an alkyl (meth)acrylate where $R^2$ is a $C_{2-10}$ alkyl group (for example, n-butyl group or a 2-ethylhexyl group) is more preferred.

In one preferred embodiment, 70 wt% or more (more preferably 90 wt% or more) of the total amount of monomer m1 is an alkyl (meth)acrylate where $R^2$ in the above formula (1) is a $C_{2-10}$ (more preferably $C_{4-8}$). The substantial entirety of monomer m1 may be a $C_{2-10}$ alkyl (more preferably $C_{4-8}$ alkyl) (meth)acrylate. The above-described monomer components may be, for example, a composition containing butyl acrylate (BA) alone as monomer m1, a composition containing 2-ethylhexyl acrylate (2EHA) alone, or a composition containing these two monomers, that is, BA and 2EHA.

The content of monomer m1 is from 80 to 99.9 wt%, preferably from 85 to 99.5 wt%, and more preferably from 90 to 99 wt%, based on the entire amount of the monomer components. In the pressure-sensitive adhesive composition, if the content of monomer m1 is too smaller than the range above, the pressure-sensitive adhesive layer formed of the composition is liable to lack adhesive performance (e.g., adhesiveness, tack). On the other hand, if the content of monomer m1 is too larger than the range above, the amount of monomer m2 which can be contained in the monomer components becomes small, and it tends to become difficult to satisfy both cohesive force (for example, durability against peeling in the presence of a fixed stress, that is, fixed load characteristics) and rebound resistance. Typically, the composition of the monomer components above (monomer composition) basically corresponds to the copolymerization ratio of an acrylic copolymer obtained by polymerizing the monomer components.

The monomer components above further contains monomer m2, in addition to monomer m1 as the main monomer. Monomer m2 is at least one monomer selected from N-hydroxyalkyl (meth)acrylamides represented by the following formula (II):

$$CH_2=C(R^3)CONHR^4 \qquad (II)$$

In formula (II), $R^3$ represents a hydrogen atom or a methyl group. Also, in formula (II), $R^4$ represents a hydroxyalkyl group having a carbon number of 1 to 4. The alkyl group in the hydroxyalkyl group may be linear or may have a branch. Specific examples of the N-hydroxyalkyl (meth)acrylamide represented by formula (II) include N-methylolacrylamide, N-methylolmethacrylamide, N-(2-hydroxyethyl) acrylamide, N-(2-hydroxyethyl) methacrylamide, N-(2-hydroxypropyl) acrylamide, N-(2-hydroxypropyl) methacrylamide, N-(1-hydroxypropyl) acrylamide, N-(1-hydroxypropyl) methacrylamide, N-(3-hydroxypropyl) acrylamide, N-(3-hydroxypropyl) methacrylamide, N-(2-hydroxybutyl) acrylamide, N-(2-hydroxybutyl) methacrylamide, N-(3-hydroxybutyl) acrylamide, N-(3-hydroxybutyl) methacrylamide, N-(4-hydroxybutyl) acrylamide, and N-(4-hydroxybutyl) methacrylamide. As a further preferred monomer m2 for the present invention, N-(2-hydroxyethyl) acrylamide and N-(2-hydroxyethyl) methacrylamide can be mentioned from the standpoint that a pressure-sensitive adhesive layer properly balanced between hydrophilicity and hydrophobicity and excellent in balance of adhesive properties can be formed. In particular, use of N-(2-hydroxyethyl) acrylamide (HEAA) is preferred. For example, HEAA preferably accounts for 50 wt% or more (more preferably 70 wt% or more, typically, substantial entirety) of the total amount of monomer m2.

Monomer m2 can function as a component enhancing crosslinking rate resulting due to polarization in the molecule of monomer m2. The content of monomer m2 is from 0.1 to 20 wt%, preferably from 0.5 to 15 wt%, and more preferably from 1 to 10 wt%, based on the entire amount of the monomer components. If the content of monomer m2 is too smaller than the range above, the pressure-sensitive adhesive layer formed of the pressure-sensitive adhesive composition is liable to lack adhesive performance (such as adhesiveness at high temperature and durability against peeling in the presence of a constant stress). On the other hand, if the content of monomer m2 is too larger than the range above, releasability that is a holding characteristic tends to be impaired.

The weight ratio (ml:m2) between monomer m1 and monomer m2 contained in the monomer components may be, for example, from 99.9:0.1 to 80:20. Usually, the weight ratio above is preferably from 99.5:0.5 to 85:15 (more preferably from 99:1 to 90:10). According to such a pressure-sensitive adhesive composition, even in the case of a composition where other than monomer m2, a monomer having a heteroatom (e.g., nitrogen, sulfur) except for oxygen is substantially not contained in the monomer components (for example, the monomer components is substantially composed of only monomer m1 and monomer m2), an effect of capable of forming a pressure-sensitive adhesive sheet more improved in cohesive force and rebound resistance can be achieved.

The total content of monomer m1 and monomer m2 may be, for example, 70 wt% or more based on the entire amount of the monomer components. The total content is preferably 90 wt% or more (more preferably 95 wt% or more) based on the entire amount of the monomer components. In one preferred embodiment of the pressure-sensitive adhesive composition disclosed here, the monomer components are substantially composed of only monomer m1 and monomer m2 (that is, the total content of monomer m1 and monomer m2 is substantially 100 wt% based on the entire amount of the monomer components). According to such a pressure-sensitive adhesive composition, an effect of capable of forming a pressure-sensitive adhesive sheet improved in cohesive force and rebound resistance with a simple composition can be achieved.

In addition to monomer m1 and monomer m2, the monomer components may contain other monomers (that is, a monomer other than monomer m1 and monomer m2; hereinafter sometimes referred to as "monomer m3") as an optional component. By using such monomer m3, for example, various characteristics of the pressure-sensitive adhesive or the structure of the acrylic copolymer can be more appropriately controlled. As monomer m3, one member or two or more members selected from various monomers which are copolymerizable with the alkyl (meth)acrylate used here and do not have a carboxyl group (typically, a carboxyl group or other acidic groups) may be employed. For example, various monomers having one or two or more ethylenically unsaturated groups such as (meth)acryloyl group and vinyl group may be used.

For example, as monomer m3, one member or two or more members selected from monomers containing nitrogen (N) as a constituent atom (excluding a compound coming under monomer m2) can be used. Examples of the nitrogen atom-containing monomer include a cyclic (meth)acrylamide such as N-(meth)acryloylmorpholine and N-acryloylpyrrolidone; an acyclic (meth)acrylamide such as (meth)acrylamide and N-substituted (meth)acrylamide (for example, an N-alkyl (meth)acrylamide such as N-ethyl (meth)acrylamide and N-n-butyl (meth)acrylamide, and an N,N-dialkyl (meth)acrylamide such as N,N-dimethyl (meth)acrylamide, N,N-diethyl (meth)acrylamide, N,N-dipropyl (meth)acrylamide, N,N-diisopropyl (meth)acrylamide, N,N-di(n-butyl) (meth)acrylamide, and N,N-di(t-butyl) (meth)acrylamide); an N-vinyl cyclic amide such as N-vinyl-2-pyrrolidone, N-vinyl-2-piperidone, N-vinyl-3-morpholinone, N-vinyl-2-caprolactam, N-vinyl-1,3-oxazin-2-one, and N-vinyl-3,5-morpholinedione; an amino group-containing monomer such as aminoethyl (meth)acrylate, N,N-dimethylaminoethyl (meth)acrylate and N,N-dimethylaminopropyl (meth)acrylate; a maleimide skeleton-containing monomer such as N-cyclohexylmaleimide and N-phenylmaleimide; and an itaconimide-based monomer such as N-methylitaconimide, N-ethylitaconimide, N-butylitaconimide, N-2-ethylhexylitaconimide, N-laurylitaconimide, and N-cyclohexylitaconimide.

Other examples of the monomer which can be employed as monomer m3 include an epoxy group-containing monomer such as glycidyl (meth)acrylate and allyl glycidyl ether; an alkoxy group-containing monomer such as methoxyethyl (meth)acrylate, methoxypropyl (meth)acrylate, methoxyethylene glycol (meth)acrylate, and methoxypropylene glycol (meth)acrylate; a cyano group-containing monomer such as acrylonitrile and methacrylonitrile; a styrene-based monomer such as styrene and $\alpha$-methylstyrene; an $\alpha$-olefin such as ethylene, propylene, isoprene, butadiene, and isobutylene; an isocyanate group-containing monomer such as 2-methacryloyloxyethyl isocyanate; a vinyl ester-based monomer such as vinyl acetate and vinyl propionate; a vinyl ether-based monomer such as vinyl ether; a heterocyclic ring-containing (meth)acrylic acid ester such as tetrahydrofurfuryl (meth)acrylate; a halogen atom-containing monomer such as fluorine (meth)acrylate; an alkoxysilyl group-containing monomer such as 3-methacryloxypropyltrimethoxysilane and vinyltrimethoxysilane; a siloxane bond-containing monomer such as silicone (meth)acrylate; an alkyl (meth)acrylate where $R^2$ in the above formula (I) is an alkyl group having a carbon number of 21 or more; an alicyclic hydrocarbon group-containing (meth)acrylate such as cyclopentyl (meth)acrylate, cyclohexyl (meth)acrylate, bornyl (meth)acrylate, and isobornyl (meth)acrylate; and an aromatic hydrocarbon group-containing (meth)acrylate such as phenyl (meth) acrylate, benzyl (meth)acrylate, phenoxyethyl (meth)acrylate, and phenoxydiethylene glycol (meth)acrylate.

As monomer m3, there may be also used, for example, a polyfunctional monomer such as ethyleneglycol di (meth)acrylate, diethyleneglycol di(meth)acrylate, triethyleneglycol di(meth)acrylate, tetraethyleneglycol di(meth)acrylate, polyethyleneglycol di(meth)acrylate, polypropyleneglycol di(meth)acrylate, neopentylglycol di(meth)acrylate, hexanediol di(meth)acrylate, pentaerythritol di(meth)acrylate, trimethylolpropane tri(meth)acrylate, pentaerythritol tri(meth) acrylate, dipentaerythritol hexa(meth)acrylate, epoxy acrylate, polyester acrylate, urethane acrylate, divinylbenzene, butyl di(meth)acrylate, and hexyl di(meth)acrylate.

Still other examples of monomer m3 include a hydroxyl group-containing monomer, for example, a hydroxyalkyl (meth)acrylate such as 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, and [4-(hydroxymethyl)cyclohexyl]methyl acrylate; an N-hydroxyalkyl (meth)acrylamide where $R^4$ in the above formula (II) is a hydroxyalkyl group having a carbon number of 1 or 5 or more; and an alkenyl alcohol such as vinyl alcohol and allyl alcohol.

In this connection, in the case of using a hydroxyl group-containing monomer as monomer m3, it is preferred that the hydroxyl group-containing monomer m3 is used at a smaller proportion than monomer m2, from the standpoint of capable of appropriately exerting an effect of using monomer m2. In other words, monomer m2 preferably accounts for a proportion of more than 50 wt% (a proportion of typically 60 wt% or more, more preferably 75 wt% or more, for example, 90 wt% or more) based on the total amount of the hydroxyl group-containing monomer contained in the monomer components. Alternatively, the hydroxyl group-containing monomer contained in the monomer components may be substantially only monomer m2.

The content of monomer m3 (in the case of containing two or more monomers m3, the total amount thereof) is appropriately 10 wt% or less based on the entire amount of the monomer components. In the pressure-sensitive adhesive composition, if the content of monomer m3 is excessively large, the pressure-sensitive adhesive sheet formed of the composition is liable to lose the balance of adhesive performances. In one preferred embodiment, the content (on the weight basis) of monomer m3 in the monomer components is less than the content of monomer m2 (more preferably not more than a half, still more preferably not more than a quarter, of the content of monomer m2). The content of monomer m3 is preferably 10 wt% or less, more preferably 5 wt% or less (for example, 2 wt% or less), based on the entire amount of the monomer components. Alternatively, the monomer components may be components containing substantially no monomer m3 (that is, monomer components substantially composed of only monomer m1 and monomer m2).

The monomer components for use in the technique disclosed herein preferably contains each monomer at such a proportion that the glass transition temperature (Tg) of the acrylic copolymer obtained by polymerizing the monomer components becomes -10°C or lower (typically from -10 to -70°C), and more preferably -20°C or lower (typically from -20 to -70°C). It is suitable to adjust the composition of the monomer components to give Tg in the range above. If Tg of the acrylic copolymer exceeds -10°C, tack as a pressure-sensitive adhesive may be lacked. Here, Tg of the acrylic copolymer indicates a value determined according to the Fox equation based on Tg of the homopolymer of each monomer constituting the monomer components and the weight fraction of the monomer (copolymerization composition). The values of Tg of the homopolymers can be obtained from various known documents (e.g., Nenchaku Gijutsu Handbook (Handbook of Adhesion Technology), Nikkan Kogyo Shinbun).

In the technique disclosed herein, the polymerization method for obtaining an acrylic copolymer (pressure-sensitive adhesive copolymerization product) as the base polymer from the monomer components having such a composition is not particularly limited, and various conventionally known polymerization methods may be appropriately employed. Examples of the polymerization method which can be employed include a polymerization method using a thermal polymerization initiator (a thermal polymerization method such as solution polymerization, emulsion polymerization and block polymerization); and a polymerization method by the irradiation with an active energy ray (sometimes referred to as high energy ray) such as light and radiation.

Among these polymerization methods, in view of workability, quality stability and the like, for example, a solution polymerization method can be preferably employed. The solution polymerization is not particularly limited in its embodiment and can be performed according to the same embodiment as in conventionally known general solution polymerization, for example, by appropriately employing various known monomer supplying methods, polymerization conditions (such as polymerization temperature, polymerization time, and polymerization pressure) and materials used (such as polymerization initiator and surfactant). As the monomer supplying method, any of a batch charging method of supplying the entire amount of the monomer components at once to a reaction vessel, a continuous supplying (dropping) method, a divided supplying (dropping) method, and the like can be employed. One preferred embodiment is, for example, an embodiment where a solution obtained by dissolving the entire amount of the monomer components and an initiator into a solvent is prepared in a reaction vessel and then, the monomer components is polymerized batchwise (batch polymerization). This batch polymerization is preferred because the polymerization operation and the process control are easy. Another preferred embodiment is, for example, an embodiment where an initiator (typically a solution obtained by dissolving an initiator into a solvent) is prepared in a reaction vessel and then, polymerization is performed while adding dropwise a solution obtained by dissolving the monomer components into a solvent, to the reaction vessel (dropping polymerization or continuous polymerization). It may be also possible to charge a part of the monomer components (partial kind and/or partial proportion) into a reaction vessel typically together with a solvent and add dropwise the remaining monomer components to the reaction vessel. In the case of polymerizing monomer components containing 15 wt% or more of monomer m2, use of dropping polymerization is preferred from the standpoint that the polymerization reaction is liable to uniformly proceed.

Examples of the thermal polymerization initiator include an azo-based compound (azo-based initiator) such as 2,2'-azobisisobutyronitrile, 2,2'-azobis-2-methylbutyronitrile, dimethyl 2,2'-azobis(2-methylpropionate), 4,4'-azobis-4-cyanovaleric acid, azobisisovaleronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate, 2,2'-azobis(N,N'-dimethyleneisobutylamidine) dihydrochloride and 2,2'-azobis[N-(2-carboxyethyl)-2-methylpropionamidine] hydrate; a persulfate such as potassium persulfate and ammonium persulfate; a peroxide (peroxide-based initiator) such as dibenzoyl peroxide, t-butyl permaleate, t-butyl hydroperoxide, and hydrogen peroxide; a substituted ethane-based initiator such as phenyl-substituted ethane; and a redox-type initiator such as a combination of a persulfate and sodium hydrogensulfite, and a combination of a peroxide and sodium ascorbate. In the case of polymerizing the monomer components by the thermal polymerization method, a polymerization temperature of, for example, approximately from 20 to 100°C (typically from 40 to 80°C) can be suitably employed.

The polymerization method by the irradiation with light (typically ultraviolet ray) is typically performed using a photopolymerization initiator. The photopolymerization initiator is not particularly limited, and examples thereof which can be used include a ketal-based photopolymerization initiator, an acetophenone-based photopolymerization initiator, a benzoin ether-based photopolymerization initiator, an acylphosphine oxide-based photopolymerization initiator, an $\alpha$-ketol-based photopolymerization initiator, an aromatic sulfonyl chloride-based photopolymerization initiator, a photoactive oxime-based photopolymerization initiator, a benzoin-based photopolymerization initiator, a benzyl-based photopolymerization initiator, a benzophenone-based photopolymerization initiator, and a thioxanthone-based photopolymerization initiator. One of these photopolymerization initiators may be used alone, or two or more thereof may be used in combination.

Specific examples of the ketal-based photopolymerization initiator include 2,2-dimethoxy-1,2-diphenylethan-1-one [for example, trade name, "IRGACURE 651" (produced by Ciba Japan)). Specific examples of the acetophenone-based photopolymerization initiator include 1-hydroxycyclohexyl phenyl ketone [for example, trade name, "IRGACURE 184" (produced by Ciba Japan)], 2,2-diethoxyacetophenone, 2,2-dimethoxy-2-phenylacetophenone, 4-phenoxydichloroacetophenone, and 4-(t-butyl)dichloroacetophenone. Specific examples of the benzoin ether-based photopolymerization initiator include benzoin methyl ether, benzoin ethyl ether, benzoin propyl ether, benzoin isopropyl ether, and benzoin isobutyl ether. As the acylphosphine oxide-based photopolymerization initiator, for example, trade name, "LUCIRIN TPO" (produced by BASF) may be used. Specific examples of the $\alpha$-ketol-based photopolymerization initiator include 2-methyl-2-hydroxypropiophenone and 1-[4-(2-hydroxyethyl)phenyl]-2-methylpropan-1-one. Specific examples of the aromatic sulfonyl chloride-based photopolymerization initiator include 2-naphthalenesulfonyl chloride. Specific examples of the photoactive oxime-based photopolymerization initiator include 1-phenyl-1,1-propanedione-2-(o-ethoxycarbonyl)-oxime. Specific examples of the benzoin-based photopolymerization initiator include benzoin. Specific examples of the benzyl-based photopolymerization initiator include benzyl. Specific examples of the benzophenone-based photopolymerization initiator include benzophenone, benzoylbenzoic acid, 3,3'-dimethyl-4-methoxybenzophenone, polyvinylbenzophenone, and $\alpha$-hydroxycyclohexyl phenyl ketone. Specific examples of the thioxanthone-based photopolymerization initiator include thioxanthone, 2-chlorothioxanthone, 2-methylthioxanthone, 2,4-dimethylthioxanthone, isopropylthioxanthone, 2,4-diisopropylthioxanthone, and dodecylthioxanthone.

The amount of the polymerization initiator used is not particularly limited. For example, the amount of the polymerization initiator used may be approximately from 0.01 to 2 parts by weight (preferably from 0.02 to 1 part by weight) per 100 parts by weight of the total amount of the monomer components.

The pressure-sensitive adhesive composition disclosed herein can be a composition further containing an isocyanate-based crosslinking agent, in addition to the acrylic copolymer obtained by polymerizing the monomer components. By crosslinking (curing) the acrylic copolymer with use of such an isocyanate-based crosslinking agent, appropriate cohesive force and adhesive force can be imparted to the pressure-sensitive adhesive layer.

Examples of the isocyanate-based crosslinking agent for use in the present invention include an aliphatic polyisocyanate such as 1,6-hexamethylene diisocyanate, 1,4-tetramethylene diisocyanate, 2-methyl-1,5-pentane diisocyanate, 3-methyl-1,5-pentane diisocyanate, and lysine diisocyanate; an alicyclic polyisocyanate such as isophorone diisocyanate, cyclohexyl diisocyanate, hydrogenated tolylene diisocyanate, hydrogenated xylene diisocyanate, hydrogenated diphenylmethane diisocyanate, and hydrogenated tetramethylxylene diisocyanate; an aromatic polyisocyanate such as 2,4-tolylene diisocyanate, 2,6-tolylene diisocyanate, 4,4'-diphenylmethane diisocyanate, 2,4'-diphenylmethane diisocyanate, 4,4'-diphenylether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate, and 3,3'-dimethoxydiphenyl-4,4'-diisocyanate; and an aromatic aliphatic polyisocyanate such as xylylene-1,4-diisocyanate and xylylene-1,3-diisocyanate.

Incidentally, as the isocyanate-based crosslinking agent, there can be used a dimer, trimer, reaction product, polymerization product or the like of the isocyanate-based compound exemplified above (for example, a dimer or trimer of diphenylmethane diisocyanate, a reaction product of trimethylolpropane and tolylene diisocyanate, a reaction product of trimethylolpropane and hexamethylene diisocyanate, polymethylene polyphenyl isocyanate, polyether polyisocyanate, or polyester polyisocyanate). For example, a reaction product of trimethylolpropane and tolylene diisocyanate can be preferably used.

In the present invention, among these isocyanate-based crosslinking agents, one crosslinking agent or two or more crosslinking agents (typically one isocyanate-based crosslinking agent) are used as the crosslinking agent. The amount of the isocyanate-based crosslinking agent used may be, for example, approximately from 0.01 to 20 parts by weight (preferably from 0.01 to 15 parts by weight) per 100 parts by weight of the monomer components (basically corresponding to 100 parts by weight of the acrylic copolymer in the case where the polymerization conversion ratio of the monomer components in the pressure-sensitive adhesive composition is nearly 100%). If the amount of the crosslinking agent used is too small, a sufficient effect (an effect of improving adhesive performance) can be hardly exerted, whereas if the amount used is excessively large, the balance of adhesive characteristics is liable to be lost. Usually, the isocyanate-based crosslinking agent is suitably used in an amount of 0.01 to 10 parts by weight (preferably from 0.02 to 8 parts by weight, for example, from 0.05 to 7 parts by weight) per 100 parts by weight of the monomer component.

In the present invention, an isocyanate-based crosslinking agent and another crosslinking agent may be used in combination as long as the effects of the present invention are not impaired. As the crosslinking agent here, crosslinking agents conventionally known in the field of pressure-sensitive adhesive can be appropriately selected, and examples thereof which can be used include an epoxy-based crosslinking agent, an aziridine-based crosslinking agent, a melamine-based crosslinking agent, a metal chelate-based crosslinking agent, a metal salt-based crosslinking agent, a peroxide-based crosslinking agent, an oxazoline-based crosslinking agent, an urea-based crosslinking agent, an amino-based crosslinking agent, a carbodiimide-based crosslinking agent, and a coupling agent-based crosslinking agent (for example, a silane coupling agent). One of these crosslinking agents may be used alone, or two or more thereof may be used in combination.

In the pressure-sensitive adhesive layer in the pressure-sensitive adhesive sheet disclosed herein, the gel fraction of the pressure-sensitive adhesive constituting the pressure-sensitive adhesive layer is preferably adjusted to 80% or more, more preferably 85% or more, and still more preferably 90% or more. It is suitable to appropriately set the conditions such as monomer composition (for example, the amount of monomer m2 used), molecular weight of an acrylic copolymer, formation conditions of a pressure-sensitive adhesive layer, and kind and amount used of a crosslinking agent, so that a pressure-sensitive adhesive (in the case of a composition containing a crosslinking agent, a pressure-sensitive adhesive after crosslinking) having the gel fraction above can be formed. When the gel fraction of the pressure-sensitive adhesive is 80% or more, a pressure-sensitive adhesive sheet capable of being separated at the time of releasing from an adherend with no remaining of the pressure-sensitive adhesive and suitable as a pressure-sensitive adhesive sheet for releasing application can be provided.

The "gel fraction of the pressure-sensitive adhesive" as used herein indicates a value as measured by the following method.

A pressure-sensitive adhesive sample (weight: $W_{b1}$) is wrapped in a porous polytetrafluoroethylene film (weight: $W_{b2}$) having an average pore size of 0.2 $\mu$m to make a pouch shape, and the opening is tied with a kite string (weight: $W_{b3}$). This pack is immersed in 50 mL of ethyl acetate and allowed to stand at room temperature (typically 23°C) for 7 days. Thereafter, the pack is taken out, and ethyl acetate attached to the outer surface is wiped off. The pack is dried at 130°C for 2 hours, and the weight of the pack ($W_{b4}$) is measured. The gel fraction of the pressure-sensitive adhesive is determined by substituting each value into the following formula:

$$\text{Gel fraction [\%]} = [(W_{b4} - W_{b2} - W_{b3})/W_{b1}] \times 100$$

Incidentally, as the porous polytetrafluoroethylene (PTFE) film above, trade name, "NITOFLON (registered trademark) NTF1122" (average pore size: 0.2 $\mu$m, porosity: 75%, thickness: 85 $\mu$m), available from Nitto Denko Corporation, or a film equivalent thereto is preferably used.

In addition to the above-described acrylic copolymer and the crosslinking agent used as needed, the pressure-sensitive adhesive composition disclosed herein may contain, as an optional component, various additives generally employed in the field of pressure-sensitive adhesive composition. Examples of this optional component include a tackifier (such as rosin-based resin, petroleum resin, terpene-based resin, phenol-based resin, and ketone-based resin), a plasticizer, a softener, a filler, a colorant (such as pigment and dye), an antioxidant, a leveling agent, a stabilizer, and an antiseptic. As for such additives, conventionally known additives may be used in a usual manner and since the present invention is not particularly characterized thereby, their detailed descriptions are omitted here.

Also, in the pressure-sensitive adhesive composition disclosed herein, a polymer other than the above-described acrylic copolymer may be appropriately blended for the purpose of adjusting viscosity (typically for thickening). Examples of the polymer which can be used for adjusting viscosity include styrene butadiene rubber (SBR), isoprene rubber (IR), a styrene butadiene-styrene block copolymer (SBS), an ethylene-vinyl acetate copolymer, acryl rubber, polyurethane, and a polyester. In addition, an acrylic polymer obtained by copolymerizing an alkyl (meth)acrylate with a functional monomer (for example, one member or two or more members selected from an acrylic monomer having a functional group, such as acrylamide, acrylonitrile, acryloylmorpholine, and acrylic acid) may be used as the polymer for adjusting viscosity. A polymer substantially not containing a carboxyl group (more preferably a carboxyl group and other acidic groups) is preferably employed as the polymer for adjusting viscosity.

One of these polymers for adjusting viscosity may be used alone, or two or more thereof may be used in combination, but this polymer is preferably used in an amount of 40 wt% or less (typically from 5 to 40 wt%) based on the entire pressure-sensitive adhesive formed from the pressure-sensitive adhesive composition. In other words, the proportion of the polymer for adjusting viscosity is 40 wt% or less (more preferably 20 wt% or less) of the pressure-sensitive adhesive forming components contained in the composition.

The pressure-sensitive adhesive composition disclosed herein is preferably configured such that the acrylic copolymer obtained by polymerizing the monomer components accounts for 50 wt% or more (more preferably 70 wt% or more, for example, 90 wt% or more) in the pressure-sensitive adhesive formed from the composition. Such a pressure-sensitive adhesive composition can form a pressure-sensitive adhesive more improved in adhesive performance.

The pressure-sensitive adhesive composition disclosed herein is characterized by substantially not containing a crosslinking catalyst. The crosslinking catalyst includes a metal-based crosslinking catalyst generally employed in the field of pressure-sensitive adhesive composition, and examples thereof include tetra-n-butyl titanate, tetraisopropyl titanate, butyltin oxide, and dioctyltin dilaurate. By virtue of substantially not containing such a crosslinking catalyst, an environment-friendly pressure-sensitive adhesive sheet can be produced. The term "substantially not containing" as used in the present invention means that the amount of the crosslinking agent used is not more than such an amount as being short of providing an acceleration effect of the crosslinking reaction, and, for example, means that the crosslinking agent is contained less than 10 ppm in the pressure-sensitive adhesive composition.

The process for producing an acrylic pressure-sensitive adhesive sheet according to the present invention comprises forming a pressure-sensitive adhesive layer by using any one pressure-sensitive adhesive composition disclosed herein. This pressure-sensitive adhesive layer is provided on one surface or both surfaces of a sheet-like substrate (support) in a fixed manner (without intention to separate the pressure-sensitive adhesive layer from the substrate), whereby a substrate-attached pressure-sensitive adhesive sheet can be produced. Alternatively, the pressure-sensitive adhesive layer is provided, for example, on a support having releasability, such as a release liner (for example, release paper or resin sheet whose surface is subjected to a release treatment), whereby a substrate-less pressure-sensitive adhesive sheet can be produced. The concept of the pressure-sensitive adhesive sheet as used herein encompasses those called a pressure-sensitive adhesive tape, a pressure-sensitive adhesive label, a pressure-sensitive adhesive film and the like. Incidentally, the pressure-sensitive adhesive layer is not limited to a continuously formed one but may be a pressure-sensitive adhesive layer formed, for example, in a regular or random pattern such as point or stripe.

As the substrate constituting the pressure-sensitive adhesive sheet, there can be used one appropriately selected according to usage of the pressure-sensitive adhesive sheet, from, for example, a plastic film including a polyolefin film such as polyethylene, polypropylene, poly-1-butene, poly-4-methyl-1-pentene, ethylene/propylene copolymer, ethylene/1-butene copolymer, ethylene/vinyl acetate copolymer, ethylene/ethyl acrylate copolymer, and ethylene/vinyl alcohol copolymer, a polyester film such as polyethylene terephthalate, polyethylene naphthalate and polybutylene terephthalate, a polyacrylate film, a polystyrene film, a polyamide film such as nylon 6, nylon 6,6 and partial aromatic polyamide, a polyvinyl chloride film, a polyvinylidene chloride film, a polycarbonate film, a polyfluoroethylene film, a polyimide film, and a polyvinyl alcohol film; a foam substrate including polyurethane foam and polyethylene foam; paper including craft paper, crepe paper and Japanese paper; cloth including cotton cloth and staple cloth; a nonwoven fabric including polyester nonwoven fabric and vinylon nonwoven fabric; and a metal foil including aluminum foil and copper foil. As the plastic film, either an unstretched film or a stretched (uniaxially stretched or biaxially stretched) film can be used. Also, the substrate surface on which the pressure-sensitive adhesive layer is provided may be subjected to a surface treatment such as primer coating and corona discharge treatment. The thickness of the substrate may be appropriately selected according to the purposes, but in general, the thickness is basically on the order of 10 $\mu$m to 500 $\mu$m (typically from 10 $\mu$m to 200 $\mu$m).

The pressure-sensitive adhesive layer can be formed, for example, by applying (typically coating) any one pressure-sensitive adhesive composition disclosed herein on a support (a substrate or a release liner), and drying the composition. This formation method for a pressure-sensitive adhesive layer may be preferably applied to a pressure-sensitive adhesive composition in a form where an acrylic copolymer obtained by at least partially (preferably, substantially completely) polymerizing the monomer components in advance by an appropriate polymerization method (typically, thermal polymerization method) and a crosslinking agent are dissolved or dispersed in a liquid medium (such as organic solvent and water).

The pressure-sensitive adhesive layer can be also formed by applying (typically coating) any one pressure-sensitive adhesive composition disclosed herein on a support (a substrate or a release liner), and irradiating the composition with an active energy ray (for example, an ultraviolet ray) to cure. This formation method for a pressure-sensitive adhesive layer may be preferably applied to an energy ray-curable pressure-sensitive adhesive composition prepared by partially polymerizing the monomer components in advance by an appropriate polymerization method (typically photopolymerization method), and blending the partial polymerization product with a photopolymerization initiator and a crosslinking agent (such as polyfunctional (meth)acrylate) that is used if desired. This active energy ray-curable pressure-sensitive adhesive composition can have a composition substantially not containing a liquid medium. In the case where the composition contains a liquid medium, it is preferred that the composition applied to the support is dried and then irradiated with an active energy ray.

The pressure-sensitive adhesive composition can be coated, for example, by using a commonly employed coater such as gravure roll coater, reverse roll coater, kiss roll coater, dip roll coater, bar coater, knife coater, and spray coater. From the standpoint of, for example, accelerating a crosslinking reaction or enhancing preparation efficiency, drying of the pressure-sensitive adhesive composition is preferably performed under heating. The drying temperature varies depending on the kind of the support on which the composition is coated, but, for example, a temperature of approximately from 40 to 150°C, preferably approximately from 70 to 130°C, can be employed. Also, a drying time of approximately from 1 to 20 minutes, preferably approximately from 2 to 10 minutes, can be employed. Incidentally, in the case of a substrate-attached pressure-sensitive adhesive sheet, the pressure-sensitive adhesive composition may be applied directly on a substrate to form a pressure-sensitive adhesive layer, or a pressure-sensitive adhesive layer formed on a release liner may be transferred onto a substrate.

The thickness of the pressure-sensitive adhesive layer is not particularly limited but is usually, for example, 2 $\mu$m or more (preferably 5 $\mu$m or more and more preferably 7 $\mu$m or more), and in this case, good adhesive performance (for example, adhesive strength) can be realized. Furthermore, it is usually suitable to set the thickness to 400 $\mu$m or less (typically 200 $\mu$m or less, for example, 100 $\mu$m or less).

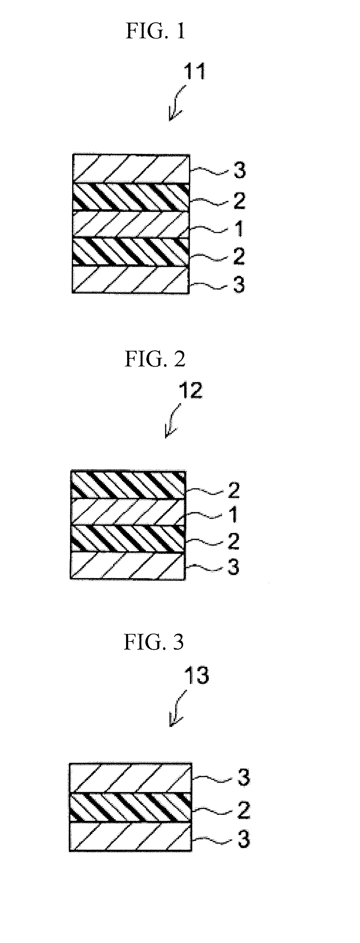

The pressure-sensitive adhesive sheet disclosed herein may be, for example, one having a cross-sectional structure schematically shown in Figs. 1 to 6. Of these, Figs. 1 and 2 show configuration examples of the substrate-attached pressure-sensitive adhesive sheets of double-coated pressure-sensitive adhesive type. The pressure-sensitive adhesive sheet 11 shown in Fig. 1 is configured such that a pressure-sensitive adhesive layer 2 is provided on both surfaces of a substrate 1 and each pressure-sensitive adhesive layer 2 is protected by a release liner 3 having a release surface on at least the pressure-sensitive adhesive layer side. The pressure-sensitive adhesive sheet 12 shown in Fig. 2 is configured such that a pressure-sensitive adhesive layer 2 is provided on both surfaces of a substrate 1 and one pressure-sensitive adhesive layer is protected by a release liner 3 having a release surface on both sides. This kind of a pressure-sensitive adhesive sheet 12 can be configured such that by winding the pressure-sensitive adhesive sheet 12, another pressure-sensitive adhesive layer is brought into contact with the back surface of the release liner 3 and the another pressure-sensitive adhesive layer is also protected by the release liner 3.

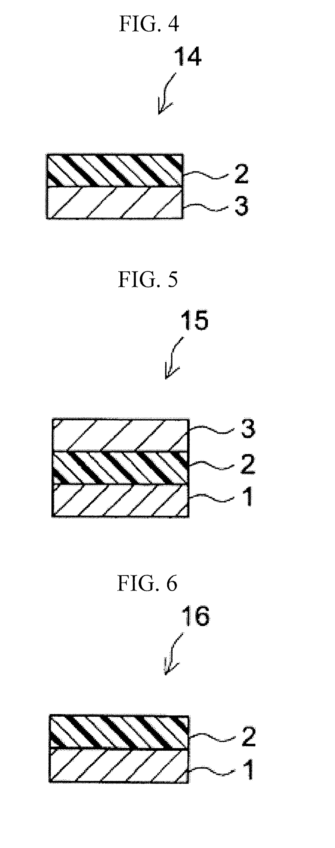

Figs. 3 and 4 show configuration examples of the substrate-less pressure-sensitive adhesive sheets. The pressure-sensitive adhesive sheet 13 shown in Fig. 3 is configured such that both surfaces of a substrate-less pressure-sensitive adhesive layer 2 are protected by a release liner 3 having a release surface on at least the pressure-sensitive adhesive layer side. The pressure-sensitive adhesive sheet 14 shown in Fig. 4 is configured such that one surface of a substrate-less pressure-sensitive adhesive layer 2 is protected by a release liner 3 having a release surface on both sides and by winding this sheet, another surface of the pressure-sensitive adhesive layer 2 can be brought into contact with the release liner 3, letting the another surface be also protected by the release liner 3.

Figs. 5 and 6 are configuration examples of the substrate-attached pressure-sensitive adhesive sheets of single-sided pressure-sensitive adhesive type. The pressure-sensitive adhesive sheet 15 shown in Fig. 5 is configured such that a pressure-sensitive adhesive layer 2 is provided on one surface of a substrate 1 and the surface (adhesion surface) of the pressure-sensitive adhesive layer 2 is protected by a release liner 3 having a release surface on at least the pressure-sensitive adhesive layer side. The pressure-sensitive adhesive sheet 16 shown in Fig. 6 is configured such that a pressure-sensitive adhesive layer 2 is provided on one surface of a substrate 1. Another surface of the substrate 1 is a release surface, making it possible to provide a configuration where when the pressure-sensitive adhesive sheet 16 is wound, the pressure-sensitive adhesive layer 2 is brought into contact with the another surface and the surface (adhesion surface) of the pressure-sensitive adhesive layer is protected by the another surface of the substrate 1. A general releasable pressure-sensitive adhesive sheet has a configuration of Fig. 6.

The present invention is described below by referring to several Examples, but it is not intended to limit the present invention to these Examples. In the following description, unless otherwise indicated, "parts" and "%" are on the weight basis.

(Example 1)

A reaction vessel equipped with a cooling tube, a nitrogen gas inlet tube, a thermometer, a dropping funnel, and a stirrer was charged with 0.2 parts of 2,2'-azobisisobutyronitrile (AIBN) as a polymerization initiator, 98 parts of 2-ethylhexyl acrylate (2EHA, Tg of homopolymer: -70°C) and 2 parts of N-hydroxyethylacrylamide (HEAA, Tg of homopolymer: 98°C) as monomer components, and 123 parts of ethyl acetate as a solvent, followed by stirring at room temperature for one hour under nitrogen gas atmosphere. Thereafter, the contents in the reaction vessel (a solution containing the entire amount of the monomer components) were heated at 60°C under nitrogen gas stream for 5.5 hours allowing polymerization to proceed, and then held at 70°C for 2 hours. By this batch feed-type solution polymerization, an acrylic polymer solution was obtained.

To the obtained acrylic polymer solution, a reaction product of trimethylolpropane and tolylene diisocyanate ("CORONATE L", produced by Nippon Polyurethane Industry Co., Ltd.) was added as an isocyanate-based crosslinking agent in an amount of 6 parts (on the solid content basis, thereinafter the same) per 100 parts of the acrylic polymer. In this way, a pressure-sensitive adhesive composition of Example 1 was prepared.

Two release liners (thickness: 38 μm) where a surface of each of two polyethylene terephthalate (PET) films had been subjected to a release treatment with a silicone-based releasing agent were prepared. The pressure-sensitive adhesive composition above was coated on the release surface (surface treated with a releasing agent) of the first release liner by means of an applicator and dried at 100°C for 2 minutes to form a pressure-sensitive adhesive layer having a thickness of 13 μm on the release liner. This pressure-sensitive adhesive layer was laminated together with the release surface of the second release liner. In this way, a pressure-sensitive adhesive sheet (release liner-attached pressure-sensitive adhesive sheet) configured to protect both surfaces of the pressure-sensitive adhesive layer by the release liners above was produced.

(Example 2)

A pressure-sensitive adhesive composition was prepared in the same manner as in Example 1 except that an acrylic polymer solution was obtained by using 96 parts of 2-ethylhexyl acrylate (2EHA) and 4 parts of N-hydroxyethylacrylamide (HEAA) as the monomer components, and "CORONATE L" was added as an isocyanate-based crosslinking agent in an amount of 4.5 parts (on the solid content basis, hereinafter the same) per 100 parts of the acrylic polymer. A pressure-sensitive adhesive sheet was produced by using the composition.

(Comparative Example 1)

A pressure-sensitive adhesive composition was prepared in the same manner as in Example 1 except that an acrylic polymer solution was obtained by using 98 parts of 2-ethylhexyl acrylate (2EHA) and 2 parts of 2-hydroxyethyl acrylate (2HEA, Tg of homopolymer: -15°C) as the monomer components. A pressure-sensitive adhesive sheet was produced by using the composition.

(Comparative Example 2)

A pressure-sensitive adhesive composition was prepared in the same manner as in Example 2 except that an acrylic polymer solution was obtained by using 96 parts of 2-ethylhexyl acrylate (2EHA) and 4 parts of 2-hydroxyethyl acrylate (2HEA) as the monomer components. A pressure-sensitive adhesive sheet was produced by using the composition.

(Reference Example)

A pressure-sensitive adhesive composition was prepared in the same manner as in Comparative Example 1 except that 0.045 parts of dioctyltin dilaurate ("OL-1", produced by Tokyo Fine Chemical Co., Ltd.) was blended as a crosslinking catalyst. A pressure-sensitive adhesive sheet was produced by using the composition.

The following evaluation tests were performed on the acrylic pressure-sensitive adhesive sheets produced in Examples and Comparative Examples.

[Gel Fraction]

The gel fraction of the pressure-sensitive adhesive constituting the pressure-sensitive adhesive layer of the pressure-sensitive adhesive sheet of this Example was measured as follows according to the above-described measuring method for a gel fraction. That is, a porous PTFE film having a size of 100 mm x 100 mm ("NITOFLON (registered trademark) NTF1122", produced by Nitto Denko Corporation) and a kite string having a length of about 100 mm (thickness: 1.5 mm) were prepared, and the weights thereof were measured. After peeling both release liners from the release liner-attached pressure-sensitive adhesive sheet that was cut into a size of 20 cm$^2$, the pressure-sensitive adhesive sample was wrapped in the PTFE film to make a pouch shape, and the opening was tied with the kite string. The weight of this pack was measured, and the weight of the pressure-sensitive adhesive sample ($W_{b1}$) was determined by subtracting the weight of the PTFE film ($W_{b2}$) and the weight of the kite string ($W_{b3}$) from the weight of the pack. Then, the pack was immersed in 50 mL of ethyl acetate and allowed to stand at room temperature (typically 23°C) for 7 days. Thereafter, the pack was taken out of ethyl acetate, and ethyl acetate attached to the outer surface was wiped off. Furthermore, the pack was dried in a drier at 130°C for 2 hours, and the weight of the pack ($W_{b4}$) was measured. The gel fraction was determined by substituting each value into the following formula:

$$\text{Gel fraction } [\%] = [(W_{b4} - W_{b2} - W_{b3})/W_{b1}] \times 100$$

In the evaluation of gel fraction, three kinds of acrylic pressure-sensitive adhesive sheets, that is, a sheet immediately after production, a sheet after storage at room temperature for 2 days, and a sheet after storage at room temperature for 5 days, were evaluated.

In the case of an acrylic pressure-sensitive adhesive sheet for releasing application, it is required that the gal fraction after storage for 2 days is 80% or more and the gel fraction after storage for 5 days is 90% or more.

[Adhesive Force]

The release liner on one side was peeled from the pressure-sensitive adhesive sheet of each Example to expose one surface of the pressure-sensitive adhesive layer, and a PET film having a thickness of 25 μm (not subjected to a release treatment) was attached to line the sheet. This lined pressure-sensitive adhesive sheet was cut into a width of 25 mm to prepare a test piece. As the adherend, a clean glass plate and an SUS 430BA plate, which were cleaned by rubbing back and forth 10 times with an isopropyl alcohol-impregnated clean waste, were used. The release liner on the other side was peeled off, and the resulting test piece was pressure-bonded to the adherend by the method of rolling back and forth a 2-kg roller twice thereover. After storing at room temperature for 30 minutes and further at 40°C for 2 days, the test piece was taken out into the measurement environment of 23°C x 50% RH, allowed to stand for 30 minutes, and then measured for the adhesive force [N/25 mm] by using a tensile tester under the conditions of a tension rate of 300 mm/min and a peel angle of 180°.

In the case of an acrylic pressure-sensitive adhesive sheet for releasing application, it is required that the adhesive force is 1 N/25 mm or less.

The results of these evaluation tests are shown in Table 1. In this Table, the composition (kinds and quantitative ratio of monomers used) of the monomer components used for the preparation of the pressure-sensitive adhesive composition in each Example, and Tg calculated from the formation based on the Fox equation are shown together.

[Table 1]

| | Composition (Tg: °C) | Gel Fraction [%] | | | Adhesive Force to SUS 430BA [N/25 mm] | | Adhesive Force to Glass Plate [N/25 mm] | |
|---|---|---|---|---|---|---|---|---|
| | | Initial | After 2 Days | After 5 Days | After 30 Minutes at Room Temperature | After 5 Days at 40°C | After 30 Minutes at Room Temperature | After 5 Days at 40°C |
| Example 1 | 2EHA/ HEAA=98/2 (-68) | 24.6 | 84.9 | 91.0 | 0.23 | 0.55 | 0.33 | 0.48 |
| Example 2 | 2EHA/ HEAA=96/4 (-66) | 78.7 | 92.7 | 94.3 | 0.33 | 0.45 | 0.42 | 0.31 |
| Comparative Example 1 | 2EHA/ 2HEA=98/2 (-69) | 7.7 | 38.3 | 74.4 | 0.62 | 4.84 | 0.71 | 2.14 |
| Comparative Example 2 | 2EHA/ 2HEA=96/4 (-68) | 7.0 | 77.2 | 87.8 | 0.36 | 1.25 | 0.45 | 0.56 |

In the case of the pressure-sensitive adhesive sheet produced by blending a crosslinking agent as Reference Example, the gel fraction was 96.9% at the initial, 97.0% after 2 days, and 97.2% after 5 days.

As seen in Table 1, in both of the pressure-sensitive adhesive sheets of Examples 1 and 2, the crosslinking reaction could be completed in a short period of time without using a crosslinking catalyst. Therefore, the adhesive force to either the SUS 430BA plate or the glass plate was low and in particular, even after storage under heating, a significant increase in the adhesive force was not confirmed. In this way, it was verified that an acrylic pressure-sensitive adhesive sheet having releasability can be produced without using a crosslinking catalyst.

On the other hand, in both of the pressure-sensitive adhesive sheets of Comparative Examples 1 and 2 where monomer m2 of the present invention was not used and a crosslinking catalyst was also not used, the crosslinking reaction proceeded slowly and it took a long period of time to obtain a sufficient gel fraction. As a result, the adhesive force was significantly changed with aging, revealing that releasability can be hardly obtained.

While the invention has been described in detail and with reference to specific embodiments thereof, it will be apparent to one skilled in the art that various changes and modifications can be made therein without departing from the spirit and scope of the invention.

This application is based on Japanese Patent Application No. 2009-258401 filed on November 11, 2009, the contents of which are incorporated herein by way of reference.

INDUSTRIAL APPLICABILITY

According to the process for producing an acrylic pressure-sensitive adhesive sheet of the present invention, a method where a crosslinking reaction can be completed in a short period of time substantially without using a crosslinking catalyst and an acrylic pressure-sensitive adhesive sheet having stable adhesive characteristics is provided.

DESCRIPTION OF REFERENCE NUMERALS AND SIGNS

1: Substrate
2: Pressure-sensitive adhesive layer
3: Release liner
11, 12, 13, 14, 15, 16: Pressure-sensitive adhesive sheet

**Claims**

1. A process for producing an acrylic pressure-sensitive adhesive sheet, comprising forming an acrylic pressure-sensitive adhesive layer by crosslinking an acrylic pressure-sensitive adhesive composition containing:

    an acrylic copolymer obtained by polymerizing monomer components containing
    at least one monomer (monomer m1) selected from alkyl (meth)acrylates represented by the following formula (I) in an amount of 80 to 99.9 wt% based on the entire amount of the monomer components:

    $$CH_2=C(R^1)COOR^2 \qquad (I)$$

    (wherein $R^1$ represents a hydrogen atom or a methyl group, and $R^2$ represents an alkyl group having a carbon number of 1 to 20), and
    at least one monomer (monomer m2) selected from N-hydroxyalkyl (meth)acrylamides represented by the following formula (II) in an amount of 0.1 to 20 wt% based on the entire amount of the monomer components:

    $$CH_2=C(R^3)CONHR^4 \qquad (II)$$

    (wherein $R^3$ represents a hydrogen atom or a methyl group, and $R^4$ represents a hydroxyalkyl group having a carbon number of 1 to 4);
    and
    an isocyanate-based crosslinking agent,
    and containing substantially no crosslinking catalyst.

2. The process for producing an acrylic pressure-sensitive adhesive sheet according to claim 1, wherein said acrylic copolymer has a glass transition temperature (Tg) of -10°C or lower.

3. The process for producing an acrylic pressure-sensitive adhesive sheet according to claim 1 or 2, wherein said monomer m2 is N-(2-hydroxyethyl) (meth)acrylamide.

4. The process for producing an acrylic pressure-sensitive adhesive sheet according to any one of claims 1 to 3, wherein said acrylic pressure-sensitive adhesive layer has a gel fraction of 80% or more.

5. The process for producing an acrylic pressure-sensitive adhesive sheet according to any one of claims 1 to 4, wherein said acrylic pressure-sensitive adhesive sheet is an acrylic pressure-sensitive adhesive sheet having releasability.

# FIG. 1

# FIG. 2

# FIG. 3

FIG. 4

14

2
3

FIG. 5

15

3
2
1

FIG. 6

16

2
1

<table>
<tr><td colspan="2"><b>INTERNATIONAL SEARCH REPORT</b></td><td colspan="2">International application No.<br>PCT/JP2010/070150</td></tr>
</table>

**A. CLASSIFICATION OF SUBJECT MATTER**
*C09J7/02*(2006.01)i, *C09J11/06*(2006.01)i, *C09J133/04*(2006.01)i, *C09J133/26* (2006.01)i

According to International Patent Classification (IPC) or to both national classification and IPC

**B. FIELDS SEARCHED**

Minimum documentation searched (classification system followed by classification symbols)
C09J1/00-201/10

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2007-264092 A (Nitto Denko Corp.), 11 October 2007 (11.10.2007), claims; paragraphs [0030], [0031], [0037], [0040], [0091] to [0094], [0098], [0099] & US 2009/0104445 A1 & WO 2007/111138 A1 & KR 10-2008-0088655 A & CN 101395506 A | 1-5 |
| X | JP 2009-126929 A (Cheil Industries Inc.), 11 June 2009 (11.06.2009), claims; paragraphs [0026] to [0029], [0041] to [0050], [0086] to [0099] & US 2010/0239859 A & EP 2215173 A & WO 2009/066883 A1 & CN 101874091 A | 1-5 |

☒ Further documents are listed in the continuation of Box C.　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 08 February, 2011 (08.02.11) | 15 February, 2011 (15.02.11) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2010/070150

| C (Continuation). DOCUMENTS CONSIDERED TO BE RELEVANT | | |
|---|---|---|
| Category* | Citation of document, with indication, where appropriate, of the relevant passages | Relevant to claim No. |
| X | JP 2007-338 A (Nichiban Co., Ltd.),<br>11 January 2007 (11.01.2007),<br>claims; paragraphs [0019], [0020], [0032],<br>[0034], [0041] to [0044]<br>(Family: none) | 1-5 |
| A | JP 2003-165965 A (Kohjin Co., Ltd.),<br>10 June 2003 (10.06.2003),<br>claims; paragraphs [0018], [0020], [0025],<br>[0028], [0031], [0034]<br>(Family: none) | 1-5 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005314513 A
- JP 2009258401 A